(19) Europäisches Patentamt

European Patent Office

Office européen des brevets

(11) Veröffentlichungsnummer: **0 284 976 B1**

## (12) EUROPÄISCHE PATENTSCHRIFT

(45) Veröffentlichungstag der Patentschrift: **26.08.92**

(21) Anmeldenummer: **88104615.5**

(22) Anmeldetag: **23.03.88**

(51) Int. Cl.⁵: **C02F 3/30**

(54) Abwasserreinigungsverfahren mit schubweiser Abwasserzufuhr zum Belebungsbecken.

(30) Priorität: **28.03.87 DE 3710325**

(43) Veröffentlichungstag der Anmeldung:
**05.10.88 Patentblatt 88/40**

(45) Bekanntmachung des Hinweises auf die
Patenterteilung:
**26.08.92 Patentblatt 92/35**

(84) Benannte Vertragsstaaten:
**AT BE CH DE ES FR GB GR IT LI LU NL SE**

(56) Entgegenhaltungen:
**EP-A- 0 200 875**
**FR-A- 2 391 168**

**G.W.F. WASSER ABWASSER, Band 124, Nr.
10, Oktober 1983, Seiten 484-487, München,
DE; G. ERMEL: "Steuerung der simultanen
Denitrifikation über den Nitratgehalt des Belebtschlammes"**

(73) Patentinhaber: **Forschungszentrum Jülich
GmbH**
**Postfach 1913**
**W-5170 Jülich(DE)**

(72) Erfinder: **Soeder, Carl-Johannes, Prof.**
**Diemelstrasse 5**
**W-4600 Dortmund 41(DE)**
Erfinder: **Zanders, Erich**
**Kerpener Strasse 9**
**W-5013 Elsdorf(DE)**
Erfinder: **Raphael, Thomas**
**Am Truxhof 20**
**W-4600 Dortmund 50(DE)**
Erfinder: **Keusen, Heiner**
**Artilleriestrasse 30**
**W-5170 Jülich(DE)**
Erfinder: **Groeneweg, Joost, Dr.**
**Im Reuter 13**
**W-5166 Kreuzau(DE)**

EP 0 284 976 B1

**Beschreibung**

Die Erfindung bezieht sich auf ein aerobes Abwasserwasserreinigungsverfahren mit intermittierender schubweiser Abwasserzufuhr zum Belebungsbecken, von dem behandeltes Abwasser stetig abläuft, wobei der Abwasserzulauf jeweils kurzzeitig freigegeben wird, wenn die bakterielle Stoffwechselintensität im Becken unter einen vorgegebenen Wert abgesunken ist.

In biologischen Abwasserreinigungsanlagen soll die Schmutzfracht des Abwassers durch bakteriellen Abbau herabgesetzt werden. So werden bei der aeroben Abwasserreinigung in Belebungsbecken Kohlenstoffverbindungen abgebaut, daneben ist aber auch in Anlagen, bei denen bestimmte Schlammbelastungsbereiche nicht überschritten oder Nitrifikanten angereichert werden können, eine Oxidation von Ammonium möglich. Die nachfolgende Tabelle zeigt Schlammbelastungsbereiche, die eine gleichzeitige Nitrifikation zulassen.

## Bemessungswerte für einstufige Belebungsanlagen mit Nitrifikation

| Temperatur im Belebungsbecken in °C | Schlammalter TS in d | $BSB_5$-Schlammbelastung in kg/(kg.d) | Verweilzeit des Abwassers bei Regenabfluß in h |
|---|---|---|---|
| 5 | 15 | 0,1 | ca. 5,0 bis 12,0 |
| 10 | 7 | 0,2 | ca. 2,5 bis  6,0 |
| 15 | 4 | 0,3 | ca. 1,5 bis  4,0 |
| 20 | 3 | 0,4 | ca. 1,5 bis  3,0 |

Endprodukt dieser Ammoniumoxidation ist Nitrat, welches unter anoxischen Bedingungen von bestimmten Organismen als terminaler Wasserstoffakzeptor verwendet wird. Da diese anoxischen Bedingungen in herkömmlichen Belebtschlammanlagen hauptsächlich in der Nachklärung auftreten, kommt es dort zur Denitrifikation. Als Elektronendonatoren dienen den Mikroorganismen dabei entweder extrazelluläre oder intrazelluläre Kohlenstoffverbindungen.

Der bei dieser Art der Nitratreduktion freiwerdende Stickstoff steigt in Form kleiner Bläschen auf und treibt den Belebtschlamm hoch.

Auftreibender Schlamm kann nicht in das Belebungsbecken rezykliert werden und fließt mit dem gereinigten Wasser ab. Damit steht dieser Schlamm für die Reinigung des Abwassers nicht mehr zur Verfügung und belastet durch seine stark sauerstoffzehrende Eigenschaft zudem den Vorfluter erheblich.

Nur wenn es durch eine gezielte Prozeßführung (im Hinblick auf die Stickstoffentsorgung) gelingt, die Denitrifikation im Nachklärbecken zu verhindern und gleichzeitig eine weitgehende Stickstoffentsorgung in der Belebung zu erreichen, ist ein wirksamer Gewässerschutz möglich.

Eine Reihe von Abwasserreinigungsverfahren versucht diesem Anspruch zu genügen, indem gesteuert denitrifiziert wird. Die vorgeschaltete oder simultane Denitrifikation in einstufigen Belebungsanlagen sind herkömmliche oft eingesetzte Methoden. Sie arbeiten oft recht ineffektiv, da man kaum Möglichkeiten hat, den Prozeß wesentlich zu beeinflussen. Die AB-Technologie bietet schon eher Ansätze (Böhnke u.a. in Korrespondenz Abwasser 1986, Seiten 1125-33), die jedoch immer mit erheblichem Aufwand verbunden sind. Eine weitere Möglichkeit bietet das Carrousell-Verfahren (Eggert in Industrieabwasser 1985, Seiten 17-23), das sich allerdings nur bei neu zu erstellenden Anlagen verwirklichen läßt.

Ziel der Erfindung ist daher ein Abwasserreinigungsverfahren, bei dem durch entsprechende Steuerung ohne gesonderte zusätzliche Verfahrensschritte ein gleichbleibend niedriger Nitratgehalt im Abwasser erreicht werden kann.

Dieses Ziel wird erfindungsgemäß durch Abwandlung eines bereits von der Anmelderin entwickelten aeroben Abwasserreinigungsverfahrens mit intermittierender schubweiser Abwasserzufuhr zum Belebungsbecken der eingangs genannten Art dadurch erreicht, daß die Belüftung des Belebungsbeckens beginnend mit dem Abwasserzulauf zum Becken so lange auf Werte entsprechend $\leq$ 0,5 mg/l Gelöst-Sauerstoff gedrosselt wird, bis der Nitratgehalt im Becken unter einen Wert von 5 mg/l abgefallen ist.

2

Bei diesem Verfahren mit schubweiser Abwasserzugabe wird während der raschen Zugabe von Abwasser (bis zu 30 % des Beckeninhalts) die Belüftung gedrosselt oder abgestellt, und zwar solange, bis ein bestimmter Nitratgrenzwert im Becken unterschritten ist. Während dieser ersten anoxischen Phase wird das im Becken (aus der vorängehenden Phase vorhandene) Nitrat durch Denitrifikanten rasch abgebaut, denen zur Energieversorgung im übrigen genügend Kohlenstoffverbindungen zur Verfügung stehen. Während der nachfolgenden Belüftungsphase unter Abbau von Kohlenstoffverbindungen steht Sauerstoff zur Verfügung, insbesondere mit fortschreitender Reinigung des Abwassers, so daß mit dem Abwasserschub eingetragenes Ammonium nunmehr zum Nitrit bzw. Nitrat aufoxidiert wird. Diese Verbindungen werden dann wiederum bei der nächsten schubweisen Abwasserzugabe und Drosselung oder Abstellung der Sauerstoffzufuhr durch Denitrifikation beseitigt.

Das Ende der Phase des Abbaus der Kohlenstoffverbindungen und Nitrifikation (und die Steuerung der erneuten schubweisen Abwasserzugabe) kann nicht nur, wie bei dem älteren Verfahren zur Abwasserreinigung mit intermittierender Abwasserzufuhr gemäß EP A 0 200 875, über den Anstieg des Sauerstoffgehalts im Becken über einen bestimmten Grenzwert definiert werden, sondern auch über die Anzeige eines vom Eintrag an Stickstoffverbindungen mit dem zugeführten Abwasserschub abhängigen Nitratgehalts im Becken, der einen dem N-Eintrag entsprechenden Grenzwert erreicht haben soll.

Die Anlage und Durchführung des Verfahrens ähneln weitgehend der von der Anmelderin in der EP A 0 200 875 beschriebenen Art. Gemäß der vorliegenden Erfindung wird jedoch ein Sauerstoffmeßgerät 1 sowie ein Nitratmeßgerät 2 im Belebungsbecken 3 vorgesehen, mit denen die Abwasserzufuhr zum Becken 3 und dessen Sauerstoffgehalt gesteuert werden. Diese Abwasserzufuhr erfolgt schubweise über ein entsprechend gesteuertes Wehr 4, das Abwasser aus dem Vorklärbecken 5 (mit Zulauf 6) in das Belebungsbecken 3 relativ kurzzeitig in bestimmter Menge zulaufen läßt, wonach der Abwasserzulauf zum Belebungsbecken unterbrochen und das ankommende Abwasser im Vorklärbecken hinter dem Wehr aufgestaut wird.

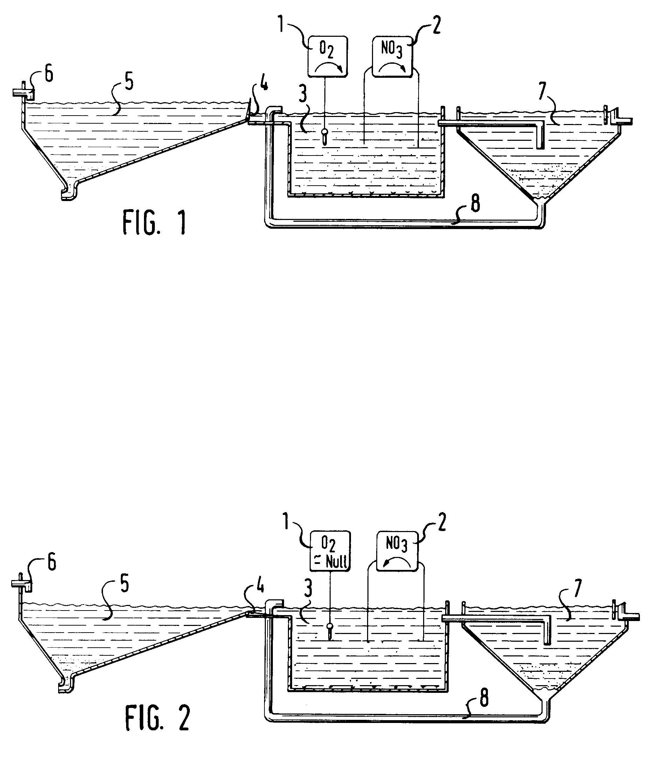

Vom Belebungsbecken 3 fließt kontinuierlich Wasser in das Nachklärbecken 7, von dessen unterem Ende eine Schlammrückführung 8 zum Belebungsbecken 3 führt, wie aus den beigefügten schematischen Darstellungen gemäß Figur 1 und 2 hervorgeht. Von diesen zeigt Figur 1 den relativ langzeitigen Zustand des Abbaus von Kohlenstoffverbindungen und der Niktrifikation unter Belüftung, während in Figur 2 die schubweise Zufuhr von Abwasser zum Belebungsbecken und Denitrifikation unter Sauerstoffdrosselung angedeutet ist.

Diese Drosselung der Sauerstoffzufuhr erfolgt am einfachsten, indem die Belüftung gänzlich abgestellt wird, bei der Nitratgehalt im Belebungsbecken unter einen Wert von 5 mg/l, insbesondere unter 1 mg/l, abgefallen ist.

Notwendig ist eine ausreichende Nitrifikantenpopulation im Belebungsbecken, die (ohne besondere Maßnahmen) erfordert, daß gewisse Schlammbelastungsbereiche eingehalten werden (s.o.).

Bei kommunalen Abwässern wird die Taktzeit vorzugsweise etwa eine Stunde ausmachen mit einem raschen Zulauf innerhalb von etwa 0,5 bis 15 min, vorzugsweise 5 min, insbesondere in etwa 2 min, wobei die gewünschten Nitratgrenzen etwa innerhalb von 10 min unterschritten sind.

Während der anoxischen Phase wird der Beckeninhalt vorzugsweise umgewälzt. Für die schubweise Abwasserzudosierung sind Mengen ≤ 30 %, insbesondere etwa 5 bis 20 % des Beckeninhalts zweckmäßig.

Vorzugsweise werden übliche kommunale Abwässer bei schubweisem Abwasserzulauf mit einer Taktzeit von etwa 1 Stunde behandelt, wobei die Belüftung beginnend mit dem raschen Zulauf der Abwassercharge für 5 min. abgestellt wird.

Das vorstehend beschriebene Verfahren der Abwasserreinigung mit weitgehender Stickstoffentsorgung wurde bereits in zwei verschiedenen Systemen erprobt:

1. Mit synthetischem Abwasser im Modellmaßstab.

2. Mit komunalem Abwasser im halbtechnischen Maßstab.

Beispiel 1    Intermittierende Abwasserdosierung mit Einhaltung einer definierten anoxischen Phase, zur simultanen Nitrifikation und Denitrifation bei Belebtschlammverfahren im Labormaßstab.

Mit zwei Laborkläranlagen (Belebungsvolumen 8 l) wurden Versuche zur Stickstoffelimination bei diskontinuierlicher Abwasserdosierung durchgeführt.

Eine Anlage wurde konventionell kontinuierlich (KAD), die zweite diskontinuierlich (DAD) mit Abwasser beschickt. Bei der DAD wurde das Abwasser 55 Min. aufgestaut, und in 5 Min. ins Belebungsbecken dosiert. Während und nach der Abwasserdosierung wurde für 15 Min. die Belüftung stark reduziert. Die Durchmischung wurde durch eingesetzte Rührwerke gewährleistet.

Betriebswerte:

BTS                    = 0,23 gr. $\underline{CSB}$ /gr. Ts/d.

Schlammrück-          = 100 %

führrate

Aufenthaltszeit= 12 Std.

TS Gehalt             = 3 gr/l

C : N                 = 100 : 20

$O_2$ Gehalt            KAD                    3 mg/l

DAD          vor Substratstoß    5 mg/l

nach "          "        0 mg/l

pH                    7,5

Temperatur            20°C

Bei diesen Versuchen zeigte sich, daß das für die Nitrifikation notwendige Schlammalter bei partikelfreiem Zulauf (C-Quelle → 50 % Ethanol + 50 % Acetat) gut erreicht wurde. Beide Anlagen nitrifizierten das Ammonium im Zulauf fast vollständig. ($NH_4^+$ Ablauf ≤ 2 mg/l).

Bei der KAD wurde jedoch durch unkontrollierte Denitrifikation in der Nachklärung oft Belebtschlamm ausgeschwemmt. Durch diese Störungen bedingt, kam die Nitrifikation zeitweise zum Erliegen, und es wurden $NH_4^+$ Konzentrationen im Ablauf von > 60 mg/l gemessen.

Bei der Anlage mit DAD traten diese Probleme nicht auf. Es wurde über den gesamten Versuchszeitraum eine annähernd vollständige Nitrifikation erreicht. Die Denitrifikation fand nicht wie bei KAD im Nachklärbecken, sondern im Belebungsbecken statt. Zum Ende der anoxischen Phase war das gesamte Nitrat und Nitrit denitrifiziert. Insgesamt wurden ca. 90 % des Stickstoffs vollständig entsorgt.

Weiterhin tendierte die Analge mit KAD zur Blähschlammbildung. Schlammvolumenindizes von über 500 ml/gr TS waren dabei keine Seltenheit. Der $SVI_{30}$ in der Anlage mit DAD war recht stabil und lag immer unter 150 ml/gr TS.

Die Versuche im Labormaßstab zeigten recht eindeutig, daß man mit diskontinuierlicher Abwasserzugabe und definierter anoxischer Phase simultan im einstufigen Belebungsverfahren nitrifizieren und denitrifizieren kann.

Beispiel 2    Intermittierende Abwasserdosierung mit Einhaltung einer definierten anoxischen Phase, zur simultanen Nitrifikation und Denitrifikation beim Belebtschlammverfahren im halbtechnischen Maßstab.

Auf der Zentralkläranlage Düren wurden zwei halbtechnische Versuchsanlagen mit 1 m³ Belebungsvolumen installiert und dem dort anfallenden Abwasser (50 % komunal, 50 % industriell)beschickt. Eine Anlage wurde kontinuierlich (KAD), die andere diskontinuierlich mit Abwasser versorgt (DAD). Bei unterschiedlichen Versuchen, die gefahren wurden, stellte sich heraus, daß je nach Zeitdauer der anoxischen Phase, die sich aus der hohen Sauerstoffzehrung nach der Abwasserdosierung ergibt, eine weitgehende Denitrifikation im Belebungsbecken erreicht werden könnte. Bei Einhaltung einer definierten anoxischen Phase, durch Drosselung des Sauerstoffeintrags auf Gelöst-$O_2$-Werte "Null" nach Abwasserzugabe für 5 bis 20 Min., wurde eine 90 %ige Stickstoffelimination erreicht.

Bei KAD wurde oft eine unkontrollierte Denitrifikation im Nachklärbecken beobachtet, die zum Abtreiben von Schlamm führte. Dieser Schlammabtrieb bewirkte eine Verminderung der Biomasse im Belebungsbecken, verkürzte dadurch das Schlammalter, was zu einer Verhinderung der Nitrifikation führte.

Diese Prozesse (Nitrifikation, Schlammabtrieb) wechselten sich immerfort ab, so daß sehr unungleichmäßige Ablaufwerte gemessen wurden.

Wie bei Versuchen im Labor war der $SVI_{30}$ bei KAD stets höher und stärkeren Schwankungen unterlegen als bei DAD.

Betriebswerte:

VBB       1 m$^3$

VNK       0,75 m$^3$

BTS       0,2 kg $BSB_5$/kg TS/d

Schlammrückführrate  = 100 %

Aufenthaltszeit       = ca. 8 Std.

TS Gehalt         3 gr/l

$O_2$ Gehalt         KAD $\approx$ 1 mg/l

DAD vor Substratstoß 4,5 mg/l

nach "    "    0 mg/l

(für unterschiedliche Zeit).

pH       ca. 7,5

Temp.   ca. 20 °C

C : $T_{KN}$ $\approx$ 100 : 14.


Erläuterung der Begriffe:


VBB = Volumen des Belebungsbeckens

VNK = "     "   Nachklärbeckens

BTS = Schlammbelastung

TS  = Trockensubstanz

KAD = kontinuierliche Abwasserdosierung

DAD = diskontinuierliche Abwasserdosierung.


**Patentansprüche**

1. Aerobes Abwasserreinigungsverfahren mit intermittierender schubweiser Abwasserzufuhr zum Belebungsbecken, von dem behandeltes Abwasser stetig abläuft, wobei der Abwasserzulauf jeweils kurzzeitig freigegeben wird, wenn die bakterielle Stoffwechselintensität im Becken unter einen vorgegebenen Wert abgesunken ist,
**dadurch gekennzeichnet,**
daß die Belüftung des Belebungsbeckens beginnend mit dem Abwasserzulauf zum Becken so lange auf Werte entsprechend ≤ 0,5 mg/l Gelöst-Sauerstoff gedrosselt wird, bei der Nitratgehalt im Becken unter einen Wert von 5 mg/l abgefallen ist.

2. Verfahren nach Anspruch 1,
**dadurch gekennzeichnet,**
daß die Belüftung abgestellt wird, bis der Nitratgehalt im Becken unter einen Wert von 5 mg/l abgefallen ist.

**3.** Verfahren nach Anspruch 1,
**dadurch gekennzeichnet,**
daß die Belüftung gedrosselt oder abgestellt wird, bis der Nitratgehalt im Becken unter einen Wert von 1 mg/l abgefallen ist.

**4.** Verfahren nach einem der vorangehenden Ansprüche,
**dadurch gekennzeichnet,**
daß für eine zur Oxidation des vorhandenen Ammoniums ausreichende Nitrifikanten-Population im Belebungsbecken gesorgt wird.

**5.** Verfahren nach Anspruch 4,
**dadurch gekennzeichnet,**
daß bei Temperaturen zwischen 5 und 20°C mit $BSB_5$-Schlammbelastungen von 0,1 bis 0,4 kg $BSB_5$/kg TS/d gearbeitet wird.

**6.** Verfahren nach einem der vorangehenden Ansprüche,
**dadurch gekennzeichnet,**
daß übliche kommunale Abwässer behandelt und der schubweise Abwasserzulauf mit einer Taktzeit von etwa 1 Stunde erfolgt, wobei die Belüftung beginnend mit dem raschen Zulauf der Abwassercharge für 5 min. abgestellt wird.

**7.** Verfahren nach Anspruch 6,
**dadurch gekennzeichnet,**
daß der Abwasserzulauf innerhalb von 0,5 bis 5 min., insbesondere in etwa 2 min. erfolgt.

**8.** Verfahren nach einem der vorangehenden Ansprüche,
**dadurch gekennzeichnet,**
daß die schubweise zugegebene Abwassermenge ≦ 30 %, insbesondere etwa 5 bis 20 % des Beckeninhalts ausmacht.

**9.** Verfahren nach Anspruch 2,
**dadurch gekennzeichnet,**
daß der Beckeninhalt während der anoxischen Phase gerührt wird.

## Claims

**1.** Aerobic waste water purification process with intermittent batchwise infeed of waste water to the activation tank, from which treated waste water flows out continuously, infeed of waste water being allowed briefly in each case when the bacterial metabolism intensity in the tank has dropped below a predetermined value, characterised in that the aeration of the activation tank, beginning with the waste water infeed to the tank, is throttled to values corresponding to ≦ 0.5 mg/l dissolved oxygen until the nitrate content in the tank has fallen to below a value of 5 mg/l.

**2.** Process according to claim 1, characterised in that the aeration is stopped until the nitrate content in the tank has fallen below a value of 5 mg/l.

**3.** Process according to claim 1, characterised in that the aeration is throttled or stopped until the nitrate content in the tank has fallen below a value of 1 mg/l.

**4.** Process according to one of the preceding claims, characterised in that an adequate population of nitrifying bacteria for oxidation of the ammonium present is ensured.

**5.** Process according to claim 4, characterised in that operation is at temperatures between 5 and 20 °C, with $BSB_5$ sludge loadings of 0.1 to 0.4 kg $BSB_5$/kg TS/d.

**6.** Process according to one of the preceding claims, characterised in that conventional communal waste waters are treated and the batchwise infeed of waste water is effected with a cycle time of about 1 hour, aeration being stopped beginning with the rapid infeed of the waste water batch for 5 min.

**7.** Process according to claim 6, characterised in that waste water infeed is effected within 0.5 to 5 min., especially in about 2 min.

**8.** Process according to one of the preceding claims, characterised in that the batchwise-introduced waste water quantity amounts to ≦ 30 %, especially about 5 to 20 %, of the tank contents.

**9.** Process according to claim 2, characterised in that the tank contents are agitated during the anoxic phase.

**Revendications**

**1.** Procédé d'épuration aérobie des eaux usées, comportant l'amenée discontinue, par lots, des eaux usées dans le bassin d'activation, à partir duquel des eaux usées traitées sont évacuées en continu, procédé dans lequel l'introduction des eaux usées s'effectue à chaque fois pendant une courte durée quand l'intensité du métabolisme bactérien dans le bassin descend au-dessous d'une valeur prédéterminée, caractérisé en ce que l'aération du bassin d'activation, à partir de l'amenée des eaux usées dans le bassin, est réduite à des valeurs équivalant à ≦ 0,5 mg/l d'oxygène dissous jusqu'à ce que la teneur en nitrate dans le bassin passe au-dessous de la valeur de 5 mg/l.

**2.** Procédé selon la revendication 1, caractérise en ce que l'aération est stoppée jusqu'à ce que la teneur en nitrate dans le bassin passe au-dessous de la valeur de 5 mg/l.

**3.** Procédé selon la revendication 1, caractérise en ce que l'aération est réduite ou stoppée jusqu'à ce que la teneur en nitrate dans le bassin passe au-dessous de la valeur de 1 mg/l.

**4.** Procédé selon une des revendications précédentes, caractérisé en ce qu'on veille à avoir une population suffisante de nitrobactéries dans le bassin d'activation, pour l'oxydation de l'ammonium présent.

**5.** Procédé selon la revendication 4, caractérise en ce qu'on travaille à des températures comprises entre 5 et 20°C, avec des charges $DBO_5$-boues de 0,1 à 0,4 kg $DBO_5$/kg d'extrait sec/d.

**6.** Procédé selon une des revendications précédentes, caractérisé en ce qu'on traite des eaux usées de ville, et l'introduction discontinue des eaux usées s'effectue pendant une durée de cycle d'environ 1 heure, l'aération étant stoppée pendant 5 minutes à compter de l'introduction rapide de la charge d'eaux usées.

**7.** Procédé selon la revendication 6, caractérisé en ce que l'introduction des eaux usées s'effectue en l'espace de 0,5 à 5 minutes, en particulier en à peu près 2 minutes.

**8.** Procédé selon une des revendications précédentes, caractérise en ce que la quantité d'eaux usées ajoutée de façon discontinue représente ≦ 30 %, en particulier environ 5 à 20 % du contenu du bassin.

**9.** Procédé selon la revendication 2, caractérisé en ce qu'on agite le contenu du bassin pendant la phase anoxyque.

FIG. 1

FIG. 2